# EUROPEAN PATENT SPECIFICATION

(11) **EP 3 817 413 B1**
(45) Date of publication and mention of the grant of the patent: **17.12.2025**
(21) Application number: 19206151.3
(22) Date of filing: 30.10.2019
(51) Int. Cl.: H04L 67/10, H04L 67/141, H04L 69/14, H04W 4/02, H04W 4/40, H04W 40/02, H04W 84/00, H04W 88/06, H04L 69/163

(54) **VEHICLE, COMPUTER PROGRAM, METHOD, APPARATUS FOR DATA COMMUNICATION SERVICES OF A VEHICLE**
FAHRZEUG, COMPUTERPROGRAMM, VERFAHREN, VORRICHTUNG FÜR DATENKOMMUNIKATIONSDIENSTE EINES FAHRZEUGS
VÉHICULE, PROGRAMME INFORMATIQUE, PROCÉDÉ, APPAREIL POUR SERVICES DE COMMUNICATION DE DONNÉES D'UN VÉHICULE

(43) Date of publication of application: 05.05.2021
(73) Proprietor: Volkswagen AG, 38440 Wolfsburg (DE)
(72) Inventor: Gonzalo, Dr. Lucioni, 58454 Witten (DE)

(56) References cited:
- WO-A1-2019/140018
- US-A1- 2019 020 985

## Description

Vehicle, computer program, method, apparatus for data communication services of a vehicle.

The present invention relates to a vehicle, a computer program, a method and an apparatus for data communication services of a vehicle.

Various functions of a vehicle, for example, for purposes of maintenance or entertainment may rely on online services or data communication services. For example, online services, which can also be referred to as data communication services, are used to maintain or up-date a programmable hardware of the vehicle.

In known concepts for vehicles, the online services may selectively be routed using a single (online) interface. Such an online interface, for example, is whether configured to establish a data connection with a cellular network or a "static" network, such as a Wi-Fi network.

Using the cellular network in connection with online services such as Business-To-Customer (B2C) services (e.g. media streaming services or navigation service) may be paid by an owner of the vehicle or customer. Thus, establishing a data connection with a cellular network for transactions of service data in connection with B2C services may be fee required for the owner/customer, whereas those B2C services using a Wi-Fi network may be free of charge for the owner/customer.

Hence, using the online services can be expensive depending on the used data connection.

The published patent application WO 2019/006085 A1 relates to a multi-radio access technology access device with a transceiver interface to communicate with multiple transceiver chains and a hardware processor configured to receive a communication associated with the multiple transceiver chains and to control the multiple transceiver chains.

The published patent application US 2018/0259974 A1 relates to a vehicle comprising a telematics controller, an autonomous vehicle controller and a scheduler controller. The telematics controller and the autonomous vehicle controller are connected to a first and a second modem, respectively. The concept provides for directing the telematics controller and the autonomous vehicle controller using the scheduler controller to simultaneously communicate over a common network via the first and the second modem, respectively.

The published patent application US 2019/0037349 A1 describes a concept for data communication to and from a vehicle. A basic idea of the concept is that a device receives a request for data communication from a user on the vehicle and subsequently identifies a plurality of communication links available at a current location of the vehicle. Further, the device is configured to form an adaptive bonded communication link to a complementary remote multi-link unit first using the plurality of communication links and to adapt the adaptive bonded communication link to data communication requirements and data communication characteristics as the vehicle moves.

The published patent application document US 2019/0020985 A1 discloses a concept for policy driven interface selection.

None of the known concepts submits an approach for reducing costs of online services which an owner or a manufacturer ("OEM") of a vehicle incurs when establishing a data connection for the online services.

Thus, there may be a demand of a concept for an improved connection establishment to reduce costs for data communication services/online services.

This demand may be satisfied by the subject matter of the appended claims.

Basic idea of the proposed concept is to establish a machine-to-machine (M2M) control of end-to-end connectivity and multipath transport of service data in connection with data communication services. In context of the present disclosure, multipath transport relates to a transport of the service data via multiple network paths, which also can be referred to as multipath connections, between a router, installed at a vehicle, and an automotive cloud service for using (vehicle-related) data communication services. A combination of the used network paths making up a data connection between the router and the automotive cloud service can be defined as the end-to-end connectivity. The M2M control may automatically control an establishment of the data connection such that a favorable combination of the network paths is used for the data communication services, for example, in terms of costs and/or time.

According to a first aspect, the present disclosure relates to an apparatus for data communication services of a vehicle. The apparatus comprises a router. The router comprises a plurality of communication interfaces for connecting the vehicle with one or more auto-motive cloud services. The router is configured to establish a data connection with at least one of the automotive cloud services in accordance with a digital routing policy. The digital routing policy defines a priority for each of the communication interfaces to be used for the data connection.

The vehicle may be a watercraft, an airborne or a ground-based vehicle. For example, the vehicle is an electric vehicle/car, a plane, a boat, a motorcycle, a truck or a bus.

The data communication services, which also can be referred to as online services, may support functionalities of the vehicle. For example, one of various available data communications services provides updated digital maps to a navigation system of the vehicle.

The automotive cloud service may comprise one or more servers, data storages and/or transceivers to store and provide service data related to the data communication services. For example, the service data comprises media files or software.

The data connection can be understood as a network path or a combination of different network paths between the router and the automotive service cloud using one or a combination of the plurality of communication interfaces.

The communication interfaces may be suitable to form different network paths between the vehicle and the automotive cloud. Depending on the network path and the data communication service, costs may incur for the owner or the manufacturer of the vehicle or for a third entity, such as a network provider.

For example, on the one hand, the manufacturer pays for a network path using a mobile network in connection with data communication services for vehicle-related maintenance purposes. On the other hand, the owner pays for another network path using a mobile net-work in connection with "customer-related" data communication services like media streaming service. Further, data communication services using a public Wi-Fi network may be free of charge for the owner and/or the manufacturer.

Each of the priorities can be understood as a preference for using one of the communication interfaces or their respective network path.

Thus, the priorities, for example, depend on the costs, which the owner or the manufacturer incurs, for the data communication service in connection with using one or the combination of the network paths.

The priorities, thus, may indicate preferred communication interfaces for establishing the data connection, for example, such that the costs which the owner incurs in connection with the data communication services are lower compared to costs arising from using "non-preferred" communication interfaces for obtaining the data communication services.

For example, some of the plurality of communication interfaces configured to establish a network connectivity, which is free of charge for the owner and/or the manufacturer, may be preferred over other communication interfaces configured to establish fee required net-work paths.

Optionally or additionally, the priorities may depend on further parameters of the network paths, such as a maximal data (throughput) rate or an IT-security.

In some embodiments, at least one first communication interface of the plurality of communication interfaces is configured to establish a connection with a local area network (LAN) to establish the data connection to the one or more automotive cloud services.

The first communication interface, for example, comprises a network interface controller (NIC) to establish the connection with the LAN.

The LAN can be a private home network of the owner which otherwise may be used for private Internet access. Optionally, the LAN can be a free and/or public network. Thus, the owner may not incur additional costs related to the network path via the LAN for using any data communication services.

Further, LANs can have a better data rate than, for example mobile/cellular networks. Hence, the LAN, for example, is preferred over cellular networks for using data communication services being associated with a large amount of data to be transmitted from the automotive cloud service.

In some embodiments, the first communication interface is further configured to establish a wireless connection to a wireless access point of the local area network.

Therefore, the communication interface can comprise a wireless network interface controller (WNIC) to establish the connection to the LAN.

For example, this may enable the router to connect to the LAN whenever the vehicle is located within a range of a Wi-Fi router of the LAN.

In some embodiments, a priority defined for the first communication interface to be used for the data connection depends on a signal level of the wireless access point.

The signal level can be understood as a signal strength or a signal amplitude of a communication signal emitted by the wireless access point. Some data communication services may require a predefined signal level. Hence, the priority defined for the first communication interface may be indicative of a threshold or a function related to the signal level. For example, the higher the signal level, the higher may be the priority to use the first communication interface for establishing the data connection.

In some embodiments, at least one second communication interface of the plurality of communication interfaces is configured to establish a connection to a cellular network to establish the data connection to the one or more automotive cloud services.

The second communication interface, for example, comprises an Access Point Name (APN) gateway to establish the connection to the cellular/mobile network. Optionally, the router can comprise further APN gateways.

For example two APNs can be used for different data communication services, a B2B APN, for example, for Business-To-Business (B2B) services and a B2C APN for Business-to-Customer (B2C) services. The network path using the B2B APN is paid by the OEM and another network path using the B2C APN is paid by the owner or customer.

The digital routing policy, thus, may define different priorities for the B2B and the B2C APN depending on the costs which the owner and/or the manufacturer incur using them.

In some embodiments, the digital routing policy is time-dependent.

The priorities of the digital routing policy may change, for example, due to an urgency of some of the data communication services.

This may ensure that some urgent data communication services, such as safety-related software updates are executed, within a predefined time period.

The digital routing policy depends on operational parameters of the vehicle.

Operational parameters of the vehicle includes at least one of a driving status of the vehicle, a battery level, and a number of charging cycles. The operational parameters may additionally be, for example, a number of (elapsed) power or a geographical position obtained from a GPS sensor installed at the vehicle.

In some embodiments, the router is further configured to establish the data connection using a Multipath Transmission Control Protocol (MPTCP).

Using the MPTCP enables the router to use data communication services via multiple of the network paths. This may increase a resource usage and a redundancy of a communication via the data connection.

Thus, this may prevent data communication services from being interrupted when an availability of the network paths change like when the vehicle enters or leaves an area covered by the range of the Wi-Fi router.

In some embodiments, the router is further configured to establish the data connection to the one or more automotive cloud services via a firewall.

The firewall can be understood as a network security system which monitors and filters incoming and outgoing data received by the communication interfaces based on predetermined security rules.

This may prevent the router and components downstream of the router from being infiltrated by malware.

In some embodiments, the router is further configured to receive service data from the automotive cloud services via the data connection and transmit the service data to a processor circuitry.

In connection with some data communication services, the router may receive service data via the data connection. Exchanging the service data may also be referred to as transactions. The service data, for example, comprises files of various types, such as image data, audio data or software.

The router can transmit the service data to the processor circuitry, for example, to support or enable functionalities of the processor circuitry, which, for example, comprises an Electronic Control Unit (ECU) or a processor and a data storage of the navigation system.

In some example embodiments, the digital routing policy depends on an amount of the service data to be received via the data connection.

With some data communication services or transactions, the amount of transferred service data is higher than of other communications services. Thus, for example, priorities of communication interfaces may depend on a data (throughput) rate or costs per amount of the transferred service data.

According to a second aspect, the disclosure relates to a method for connecting a vehicle with one or more automotive cloud services. The method comprises obtaining a routing policy. Further, the method comprises establishing a data connection with at least one of the automotive cloud services in accordance with a digital routing policy. The digital routing policy defines a priority for each of the communication interfaces to be used for the data connection.

The routing policy, for example, is obtained from an external data storage, such as a cloud storage or an in-vehicle storage installed at the vehicle. Optionally, the routing policy can be provided via an additional online control connection. The online control connection can be understood as a continuous connection between the router and the automotive cloud service. The method, for example, is executed in connection with the embodiments of the apparatus described herein.

According to a third aspect, the disclosure relates to a computer program comprising instructions which, when executed by at least one processor, causes the processor to perform the method described herein.

The router may further comprise a data storage to store the instructions and/or a programmable hardware to execute the computer program.

According to a fourth aspect, the disclosure relates to a vehicle which comprises the apparatus described herein.

The apparatus, for example is installed at the vehicle. Thus, the data communication services can be used as the vehicle is moving.

Some examples of apparatuses and/or methods will be described in the following by way of example only, and with reference to the accompanying figures, in which
Fig. 1 illustrates an example of a vehicle comprising an apparatus for data communication services;
Fig. 2 illustrates an example of an apparatus for data communication services; and
Fig. 3 illustrates a method for connecting a vehicle with one or more automotive cloud services.

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not in-tended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group there-of.

Unless otherwise defined, all terms (including technical and scientific terms) are used herein in their ordinary meaning of the art to which the examples belong.

The concept disclosed in this document is based on the task of an improved establishment of a data connection for data communication services. Particularly, the concept may meet a demand of a cost reduction, session continuity and an increase of a data (throughput) rate associated with the establishment of the data connection for the data communication services of a vehicle.

Thus, the present disclosure addresses an improved end-to-end connectivity/data connection for data communication services and multipath transport, as stated in the following in more detail.

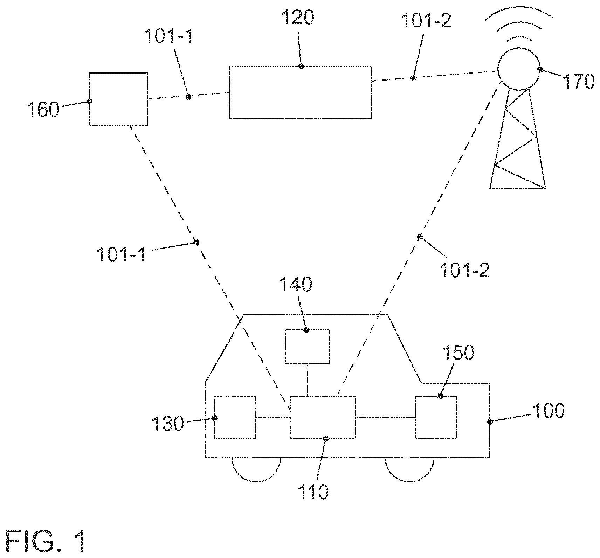

Fig. 1 illustrates a vehicle 100 comprising an apparatus 110. The apparatus 110 is coupled with a processor 130, for example, of an infotainment system and with an Electronic Control Unit (ECU) 150 of the vehicle 100. Further, the apparatus 110 is coupled with an in-vehicle data storage 140.

The apparatus 110 is configured to establish a first network path 101-1 to the automotive cloud service 120 via a wireless access point (WAP) 160 for using a data communication service.

Further, the apparatus 110 is configured to establish a second network path 101-2 to the automotive service cloud 120 via a mobile network 170.

The apparatus 110 may establish a data connection to the automotive cloud service 120 whether using the first network path 101-1, the second network path 101-2 or both the first and the second network path 101-1 and 101-2. A combination of network paths used for the data connection can be referred to as end-to-end connectivity. In general, the end-to-end connectivity may define a data connection using a single network path like, for example, the first or the second network path 101-1 or 101-2.

Further, the apparatus 110 may use a preferred end-to-end connectivity with regard to a maximal data (throughput) rate or cost which may incur for an owner of the vehicle 100 or a customer. To this end, the apparatus 110 may obtain a digital routing policy which de-fines the preferred end-to-end connectivity. The in-vehicle data 140 storage may store the digital routing policy and provide it to the apparatus 110.

In further embodiments, the digital routing policy is obtained from an "off-vehicle" data storage separated from the vehicle 100.

Depending on the end-to-end connectivity, the apparatus 110 may obtain service data from the automotive cloud service 120 via the first and/or the second network path 101-1 and 101-2 and transmit the service data to the ECU 150 or the processor 130, for example, in connection with data communication services like an update of the ECU 150 or the infotainment system.

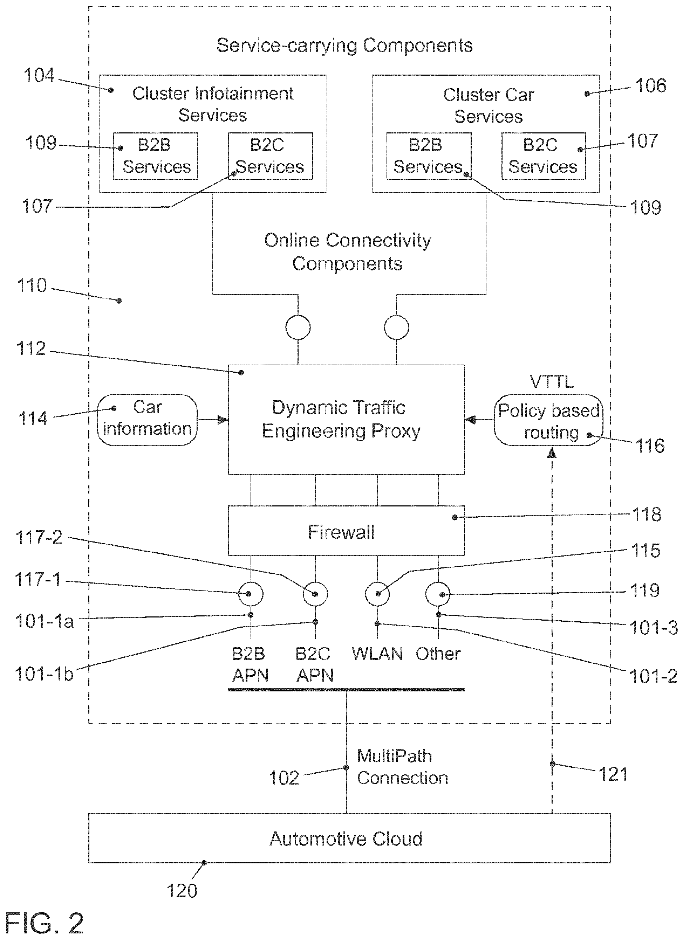

In the following, the apparatus 110 will be described in more detail with reference to Fig. 2.

Fig. 2 illustrates the apparatus 110 for data communication services of the vehicle 100. The apparatus can be understood as an online gateway of the vehicle 100.

The apparatus 110 comprises a router 112. The router 112 can also be referred to as a "Dynamic Traffic Engineering Proxy" (DTEP).

The DTEP 112 comprises communication interfaces 115, 117-1, 117-2 and 119 for connecting the vehicle with an automotive cloud service 120.

In other words, the DTEP 112 introduces an abstraction layer for the exchange of the service data belonging to a data connection 102 over different network paths 101-1a, 101-1b, 101-2 and 101-3. According to the Open Systems Interconnection (OSI) model, the DTEP 112 may be implemented in a network layer. The DTEP 112 enables M2M-controlled access to the automotive cloud service 120 over "heterogeneous" networks or "homogeneous" networks, for example, using multiple of the network paths 101-1a, 101-1b, 101-2 and 101-3.

The apparatus 110 may support multiple data communications services like infotainment services 104 (e.g. media streaming and/or navigation system support) and car services/vehicle services 106 (e.g. maintenance services and/or ECU software updates). The data communication services 104 and 106 both comprise Business-To-Business (B2B) services 109 which, for example relate to the navigation system support or ECU software up-dates, and Business-To-Customer (B2C) services 107, such as media streaming services.

The automotive cloud service 120 may comprise one or more data storages for storing service data (not illustrated) related to the data communication services 104 and 106.

The data connection 102 to the automotive cloud service 102 comprises one or more net-work paths 101-1a, 101-1b, 101-2, 101-3 which may be established using one or a combination of the communication interfaces 115, 117-1, 117-2 or 119. Each car interface is associated to a mobile or a "static" type network.

The communication interfaces 117-1 and 117-2, for example, are configured to establish the network paths 101-1a and 101-1b via a mobile network 170, also called a "cellular network". The mobile network 170 is capable of granting an IP address to each of the communication interfaces 117-1 and 117-2 and to connect the DTEP 112 with to the auto-motive cloud service 120. In mobile networks 170, interfaces, such as the communication interfaces 117-1 and 117-2, can be named Access Point Name (APN). Thus, the communication interfaces 117-1 and 117-2 can also be referred to as B2B APN and B2C APN, respectively, since the communication interfaces 117-1 and 117-2 each are associated whether with the B2B services 109 or B2C services 107.

A WLAN communication interface 115 is configured to establish the network path 101-2 via a wireless connection to wireless local area network (WLAN network) or the WAP 160 of the WLAN. The WLAN communication interface 115, for example, comprises a wire-less network interface controller (WNIC) enabling the DTEP 112 to connect to the WAP 160. WLAN networks may also be defined as "static" networks. Examples of WLAN net-works in connection with the proposed concept are a home WLAN network of an owner of the vehicle 100 or WLAN networks at gas stations.

Other communication interfaces 119 may enable, for example, establishing the network path 101-3 via charging/supercharging stations with conducted internet connectivity.

Main challenge of the mentioned "static" networks is their limited access availability. Hence, the VTTL 116 may take into account the limited availability of static networks with regard to session continuity using the WLAN communication interface 115, as stated in more detail later.

However, such WLAN networks may be paid by third entities, as the said gas station, or by the customer/owner, who may also utilize the WLAN networks for private purposes.

Thus, for example, unlike using the B2B APN 117-1 or the B2C APN 117-2, using a WLAN network of an owner/customer or a gas station for B2B or B2C services neither causes additional costs for the owner/customer nor for the manufacturer.

The DTEP 112 is configured to establish the network paths 101-1a, 101-1b, 101-2 and 101-3 in accordance with a digital routing policy 116. With regard to backward compatibility with other vehicles, the digital routing policy 116, for example, is provided by an IT backend separated from the vehicle. In some embodiments, the routing policy 116 can be provided by the IT backend via a control connection 121. Thus, the IT backend can update the routing policy 116 situationally which may enable a remote routing control by the IT backend. In some embodiments, the control connection 121 can be a continuous connection.

As shown in Fig. 2, the IT backend, for example, is comprised by the automotive cloud service 120.

Further, for compatibility with the DTEP 112, the data communication services 104 and 106 do not need to be multipath enabled by design which means that computer programs executing the data communication services 104 and 106, in general, do not need to be adapted for the multipath transport via multiple network paths 101-1a, 101-1b, 101-2, 101-3.

Establishing the data connection 102 using the network paths 101-1a, 101-1b, 101-2, 101-3 may enable an increased aggregated data (throughput) rate combining data (throughput) rates of the multiple network paths 101. However, this may require multipath capability of the apparatus 110, such as by using the DTEP 112, as well as of the automotive cloud service 120.

To this end, the DTEP 112 may be configured to establish a session (abstraction) layer according to the OSI model using a Multipath Transport Control Protocol (MPTCP). Using the MPTCP for exchanging the service data via multiple network paths 101-1a, 101-1b, 101-2, 101-3 may prevent the data communication services 104 and 106 from being impacted by multipath issues like troubles in connection with session continuity.

The digital routing policy 116 may correspond to a so-called "vehicle transaction type list" (VTTL) which defines a priority for possible end-to-end connectivities or each of the communication interfaces 115, 117-1, 117-2 and 119 and their related network paths 101-1a, 101-1b, 101-2, 101-3 to be used for the data connection 102.

In some embodiments, the VTTL 116 comprises a (transaction-centric) specification of preferred network paths ("routes") for each of the various data communication services 104 and 106 or various transactions associated with a same communication service.

The DTEP 112 can (dynamically) establish and/or adapt one or multiple of the network paths 101-1a, 101-1b, 101-2, 101-3 according to the VTTL 116.

The VTTL 116 may depend on time, an amount of service data to be received/transferred via the data connection or on operational parameters 114 of the vehicle 100.

The priorities comprised by the VTTL 116, for example, can be represented as a function F depending on various parameters. The inputs, for example, comprise a signal level of the WAP 160, a time, the operational parameters 114 (mileage status, driving status, geo-graphical position, number of charging/power cycles, battery level) of the vehicle 100 and/or transaction-specific parameters (e.g. amount and/or type of the service data and/or an urgency of the data communication service and/or session continuity).

Thus, a priority defined for the WLAN communication interface 115 to be used for the data connection may depend on a signal level of the WAP 160.

Session continuity, for example, requires that transport sessions (e.g. according to a concept of TCP or MPTCP) for exchanging the service data via the data connection 102 are maintained though, for example, an IP address of one of the communication interfaces 115, 117-1, 117-2 and 119 changes due to a handover, for example between two cells of the mobile network 170. The skilled person having benefit from the present disclosure will appreciate that establishing the data connection 102 on the basis of multiple network paths 101-1a, 101-1b, 101-2, 101-3 may ensure the session continuity. Hence, end-to-end connectivity providing for using multiple of the network paths 101-1a, 101-1b, 101-2, 101-3 may be preferred according to the VTTL 116.

In other words, based on the VTTL 116, the DTEP 112 may act as a so-called "mobility manager", which may ensure session continuity in case of congestions or any other net-work access issues such that the service data can be re-forwarded to the vehicle 100.

In some embodiments, the function F may depend on the data (throughput) rate expected for possible end-to-end connectivities. Hence, the VTTL 116, for example, provides for using an end-to-end connectivity having at least a predefined data (throughput) rate.

Thus, for example, a timing of the data communication services 104 and 106 or triggering them may depend on discrete values, such as number of power cycles or charging cycles. This may allow modelling the VTTL 116 in a "discrete" way.

The geographical position of the vehicle 100, for example, is obtained from a Global Positioning System (GPS) sensor (not illustrated) installed at the vehicle 100. The VTTL 116 may depend on the geographical position in a manner such that, for example, if the vehicle 100 approaches a range of a known WLAN network the VTTL 116 increases the priority associated with the WLAN communication interface 115.

The operational parameters 114 may be obtained from the in-vehicle data storage 140.

Optionally, the VTTL 116 may depend on a (logical) combination of multiple operational parameters 114, as stated in more detail in a following example.

The above stated aspects may be described in more detail by means of a following example in connection with Fig. 1.

The example relates to the B2B service 109 which, for example, supplies the vehicle 100 with software updates (service data) during a lifetime of the vehicle 100. To reduce costs for the manufacturer of the vehicle 100 in connection with the B2B service 109, the corresponding VTTL 116 may specify a priority for each of the communication interfaces 115 and 117-1, but with the WLAN communication interface 115 having a larger priority than the B2B APN 117-1 at the beginning of a transfer of the software updates. Furthermore, the VTTL 116 may depend on time and/or the (vehicle-related) operational parameters 114 such that after four power cycles or two days, the priority is shared between the interfaces 115 and 117-1.

The priority may further prescribe maximum permitted data (throughput) rates (traffic levels) for the interfaces 115 and 117-1. In connection with the present example, the data (throughput) rate specified for the WLAN communication interface 115, for example is higher than for the APN B2B due to the expected costs for the OEM per amount of transferred service data.

If a WLAN network becomes available during the on-going power cycle, the DTEP 112 may establish the network path 101-2 and start a MPTCP subflow (according to the concept of MPTCP) to the automotive cloud service 120. If the B2B service is still pending after four power cycles or two days, the DTEP may start forwarding the service data by establishing and using another MPTCP subflow via the B2B APN 117-1.

In some embodiments, the IT backend may be configured to record and analyze the operational parameters 114 and/or further user data (e.g. user address and/or a commute be-tween a home and a workplace of the owner/customer) to predict an interface availability, for example, from a motion pattern determined by tracking the position of the vehicle 100. For analyzing the operational parameters 114, those may be transferred to the IT backend, for example via the data connection 102. For this purpose, privacy settings of the owner/customer need to provide permissions for related data analytics of the operational parameters 114 at the IT backend. If the use of individual information is allowed, the IT backend may tailor the digital routing policy depending on the data analytics.

In aforementioned embodiments, the proposed concept is applied at a network layer of the apparatus 110.

An exchange of the service data belonging to one connection over different paths can be performed with different technologies applied either at IP or application layer.

For example, the basic idea of the present disclosure can be transferred to application layer. To this end, applications executing the data communication services 104 and 106 can be multipath enabled by design.

Further, the concept can be transferred to the IP layer. To this end, the apparatus 110 may be enabled to establish the data connection via heterogeneous IP networks.

The apparatus 110 further comprises a firewall 118 interconnected between the communication interfaces 115, 117-1, 117-2, 119 and the DTEP 112. Thus, the DTEP (112) is further configured to establish the data connection 102 to the one or more automotive cloud services 120 via the firewall 118.

According to the third aspect of the present disclosure, establishing the network paths 101-1a, 101-1b, 101-1 and/or 101-2 in accordance with the VTTL 116 may be controlled using a computer program. The DTEP 112, for example, comprises a processor to execute the computer pro-gram.

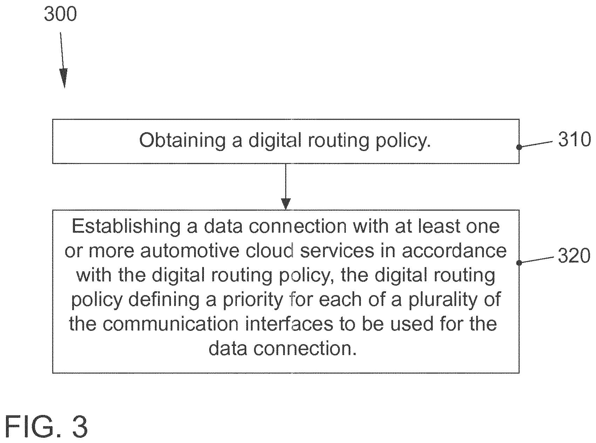

The computer program, for example, enables the apparatus 110 to perform a method 300 illustrated in Fig. 3.

The method comprises obtaining 310 a digital routing policy 116 which, for example, corresponds to the VTTL 116.

The method 300 further comprises establishing 320 a data connection with one or more automotive cloud services in accordance with the digital routing policy 116, the digital routing policy 116 defining a priority for each of the communication interfaces 115, 117-1, 117-2 and 119 to be used for the data connection.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons.

### List of reference signs

- 100: vehicle
- 101-1: first network path
- 101-1a: network path
- 101-1b: network path
- 101-2: second network path
- 101-3: network path
- 102: data connection
- 104: data communication service
- 106: data communication service
- 107: Business-To-Customer service
- 109: Business-To-Business service
- 110: apparatus
- 112: router
- 114: operational parameters
- 115: WLAN communication interface
- 116: digital routing policy
- 117-1: B2B APN
- 117-2: B2C APN
- 118: firewall
- 119: other communication interface
- 120: automotive cloud service
- 121: control connection
- 130: processor
- 140: in-vehicle data storage
- 150: Electronic Control Unit (ECU)
- 160: wireless access point
- 170: mobile network
- 300: method for connecting a vehicle with one or more automotive cloud services
- 310: obtaining a digital routing policy
- 320: establishing a data connection with at least one of the automotive cloud services in accordance with the digital routing policy, the digital routing policy (116) defining a priority for each of a plurality of communication interfaces to be used for the data connection.

## Claims

1. An apparatus (110) for data communication services (104, 106, 107, 109) of a vehicle (100), comprising:
a router (112) comprising a plurality of communication interfaces (115, 117-1, 117-2, 119) for connecting the vehicle (100) with one or more automotive cloud services (120), wherein the router (112) is configured to establish a data connection (102) with at least one of the automotive cloud services in accordance with a digital routing policy (116), the digital routing policy (116) defining a priority for each of the communication interfaces (115, 117-1, 117-2, 119) to be used for the data connection (102), wherein the digital routing policy (116) depends on an operational parameter (114) of the vehicle (100), and wherein the operational parameter includes at least one of a driving status of the vehicle, a battery level, and a number of charging cycles, wherein the digital routing policy corresponds to a vehicle transaction type list , VTTL.

2. Apparatus (110) of claim 1, wherein at least one first communication interface (115) of the plurality of communication interfaces (115, 117-1, 117-2, 119) is configured to establish a connection to a local area network to establish the data connection (102) to the one or more automotive cloud services (120).

3. Apparatus (110) of claim 2, wherein the first communication interface (115) is further configured to establish a wireless connection to a wireless access point (160) of the local area network.

4. Apparatus (110) of claim 3, wherein a priority defined for the first communication interface (115) to be used for the data connection (102) depends on a signal level of the wireless access point (160).

5. Apparatus (110) of any one of the preceding claims, wherein at least one second communication interface (117-1, 117-2) of the plurality of communication inter-faces (115, 117-1, 117-2, 119) is configured to establish a connection to a cellular network (170) to establish the data connection (102) to the one or more automotive cloud services (120).

6. Apparatus (110) of any one of the preceding claims, wherein the digital routing policy (116) is time-dependent.

7. Apparatus (110) of any one of the preceding claims, wherein the router (112) is further configured to establish the data connection (102) using a Multipath Transmission Control Protocol (MPTCP).

8. Apparatus (110) of any one of the preceding claims, wherein the apparatus further comprises a firewall (118) and, wherein the router (112) is further configured to establish the data connection (102) to the one or more automotive cloud services (120) via the firewall (118).

9. Apparatus (110) of any one of the previous claims, wherein the router (112) is further configured to:
transfer service data from the automotive cloud services (120) via the data connection (102); and
transmit the service data to a processor circuitry (130, 150).

10. Apparatus (110) of claim 9, wherein the routing policy (116) depends on an amount of the service data to be received via the data connection (102).

11. A method (300) for connecting a vehicle (100) with one or more automotive cloud services (120) for data communication services, the method (300) comprising the steps of :
obtaining (310) a digital routing policy (116); and
establishing (320) a data connection (102) with at least one of the automotive cloud services (120) in accordance with the digital routing policy (116), the digital routing policy (116) defining a priority for each of a plurality of communication interfaces (115, 117-1, 117-2, 119) to be used for the data connection (102), wherein the digital routing policy (116) depends on an operational parameter (114) of the vehicle (100), and wherein the operational parameter includes at least one of a driving status of the vehicle, a battery level, and a number of charging cycles, wherein the digital routing policy corresponds to a vehicle transaction type list, VTTL.

12. A computer program comprising instructions which, when executed by at least one processor, causes the processor to perform all the steps of the method (300) of claim 11.

13. A vehicle (100) comprising an apparatus (110) as defined in any one of the claims 1 to 10.

## Patentansprüche

1. Vorrichtung (110) für Datenkommunikationsdienste (104, 106, 107, 109) eines Fahrzeugs (100), umfassend:
einen Router (112), umfassend eine Vielzahl von Kommunikationsschnittstellen (115, 117-1, 117-2, 119) zum Verbinden des Fahrzeugs (100) mit einem oder mehreren Automobil-Cloud-Diensten (120), wobei der Router (112) konfiguriert ist, um eine Datenverbindung (102) mit mindestens einem der Automobil-Cloud-Dienste gemäß einer digitalen Routing-Richtlinie (116) herzustellen, wobei die digitale Routing-Richtlinie (116) eine Priorität für jede der Kommunikationsschnittstellen (115, 117-1, 117-2, 119) definiert, die für die Datenverbindung (102) verwendet werden soll, wobei die digitale Routing-Richtlinie (116) von einem Betriebsparameter (114) des Fahrzeugs (100) abhängt und wobei der Betriebsparameter mindestens eines einschließt von einem Fahrzustand des Fahrzeugs, einem Batteriestand und einer Anzahl von Ladezyklen, wobei die digitale Routing-Richtlinie einer Fahrzeugtransaktionstypliste, VTTL, entspricht.

2. Vorrichtung (110) nach Anspruch 1, wobei mindestens eine erste Kommunikationsschnittstelle (115) der Vielzahl von Kommunikationsschnittstellen (115, 117-1, 117-2, 119) konfiguriert ist, um eine Verbindung zu einem lokalen Netzwerk herzustellen, um die Datenverbindung (102) mit dem einen oder den mehreren Automobil-Cloud-Diensten (120) herzustellen.

3. Vorrichtung (110) nach Anspruch 2, wobei die erste Kommunikationsschnittstelle (115) ferner konfiguriert ist, um eine drahtlose Verbindung zu einem drahtlosen Zugriffspunkt (160) des lokalen Netzwerks herzustellen.

4. Vorrichtung (110) nach Anspruch 3, wobei eine Priorität, die für die erste Kommunikationsschnittstelle (115) definiert ist, die für die Datenverbindung (102) verwendet werden soll, von einer Signalstärke des drahtlosen Zugriffspunkts (160) abhängt.

5. Vorrichtung (110) nach einem der vorstehenden Ansprüche, wobei mindestens eine zweite Kommunikationsschnittstelle (117-1, 117-2) der Vielzahl von Kommunikationsschnittstellen (115, 117-1, 117-2, 119) konfiguriert ist, um eine Verbindung zu einem Mobilfunknetz (170) herzustellen, um die Datenverbindung (102) mit dem einen oder den mehreren Automobil-Cloud-Diensten (120) herzustellen.

6. Vorrichtung (110) nach einem der vorstehenden Ansprüche, wobei die digitale Routing-Richtlinie (116) zeitabhängig ist.

7. Vorrichtung (110) nach einem der vorstehenden Ansprüche, wobei der Router (112) ferner konfiguriert ist, um die Datenverbindung (102) unter Verwendung eines Multipath Transmission Control Protocol (MPTCP) herzustellen.

8. Vorrichtung (110) nach einem der vorstehenden Ansprüche, wobei die Vorrichtung ferner eine Firewall (118) umfasst und wobei der Router (112) ferner konfiguriert ist, um die Datenverbindung (102) mit dem einen oder den mehreren Automobil-Cloud-Diensten (120) über die Firewall (118) herzustellen.

9. Vorrichtung (110) nach einem der vorstehenden Ansprüche, wobei der Router (112) ferner konfiguriert ist zum:
Übertragen von Dienstdaten aus den Automobil-Cloud-Diensten (120) über die Datenverbindung (102); und
Übermitteln der Dienstdaten an eine Prozessorschaltung (130, 150).

10. Vorrichtung (110) nach Anspruch 9, wobei die Routing-Richtlinie (116) von einer Menge der über die Datenverbindung (102) zu empfangenden Dienstdaten abhängt.

11. Verfahren (300) zum Verbinden eines Fahrzeugs (100) mit einem oder mehreren Automobil-Cloud-Diensten (120) für Datenkommunikationsdienste, das Verfahren (300) umfassend die Schritte: Erhalten (310) einer digitalen Routing-Richtlinie (116); und
Herstellen (320) einer Datenverbindung (102) mit mindestens einem der Automobil-Cloud-Dienste (120) gemäß der digitalen Routing-Richtlinie (116), wobei die digitale Routing-Richtlinie (116) eine Priorität für jede einer Vielzahl von Kommunikationsschnittstellen (115, 117-1, 117-2, 119) definiert, die für die Datenverbindung (102) verwendet werden sollen, wobei die digitale Routing-Richtlinie (116) von einem Betriebsparameter (114) des Fahrzeugs (100) abhängt und wobei der Betriebsparameter mindestens eines einschließt von einem Fahrzustand des Fahrzeugs, einem Batteriestand und einer Anzahl von Ladezyklen, wobei die digitale Routing-Richtlinie einer Fahrzeugtransaktionstypliste, VTTL, entspricht.

12. Computerprogramm, umfassend Anweisungen, die, wenn sie durch mindestens einen Prozessor ausgeführt werden, den Prozessor veranlassen, alle Schritte des Verfahrens (300) nach Anspruch 11 durchzuführen.

13. Fahrzeug (100), umfassend eine Vorrichtung (110) nach einem der Ansprüche 1 bis 10.

## Revendications

1. Appareil (110) pour des services de communication de données (104, 106, 107, 109) d'un véhicule (100), comprenant :
un routeur (112) comprenant une pluralité d'interfaces de communication (115, 117-1, 117-2, 119) pour connecter le véhicule (100) à un ou plusieurs services en nuage automobiles (120), dans lequel le routeur (112) est configuré pour établir une connexion de données (102) avec au moins l'un parmi les services en nuage automobiles conformément à une politique de routage numérique (116), la politique de routage numérique (116) définissant une priorité pour chacune des interfaces de communication (115, 117-1, 117-2, 119) à utiliser pour la connexion de données (102), dans lequel la politique de routage numérique (116) dépend d'un paramètre opérationnel (114) du véhicule (100), et dans lequel le paramètre opérationnel comporte au moins l'un parmi un état de conduite de véhicule, un niveau de batterie, un nombre de cycles de charge, dans lequel la politique de routage numérique correspond à une liste de types de transactions de véhicules, VTTL.

2. Appareil (110) selon la revendication 1, dans lequel au moins une première interface de communication (115) de la pluralité d'interfaces de communication (115, 117-1, 117-2, 119) est configurée pour établir une connexion à un réseau local afin d'établir la connexion de données (102) au ou aux services en nuage automobiles (120).

3. Appareil (110) selon la revendication 2, dans lequel la première interface de communication (115) est en outre configurée pour établir une connexion sans fil à un point d'accès sans fil (160) du réseau local.

4. Appareil (110) selon la revendication 3, dans lequel une priorité définie pour la première interface de communication (115) à utiliser pour la connexion de données (102) dépend d'un niveau de signal du point d'accès sans fil (160).

5. Appareil (110) selon l'une quelconque des revendications précédentes, dans lequel au moins une seconde interface de communication (117-1, 117-2) de la pluralité d'interfaces de communication (115, 117-1, 117-2, 119) est configurée pour établir une connexion à un réseau cellulaire (170) pour établir la connexion de données (102) au ou aux services en nuage automobiles (120).

6. Appareil (110) selon l'une quelconque des revendications précédentes, dans lequel la politique de routage numérique (116) dépend du temps.

7. Appareil (110) selon l'une quelconque des revendications précédentes, dans lequel le routeur (112) est en outre configuré pour établir la connexion de données (102) à l'aide d'un protocole de commande de transmission à trajets multiples (MPTCP).

8. Appareil (110) selon l'une quelconque des revendications précédentes, dans lequel l'appareil comprend en outre un pare-feu (118) et dans lequel le routeur (112) est en outre configuré pour établir la connexion de données (102) au ou aux services en nuage automobiles (120) par le biais du pare-feu (118).

9. Appareil (110) selon l'une quelconque des revendications précédentes, dans lequel le routeur (112) est en outre configuré pour :
transférer des données de service à partir des services en nuage automobiles (120) par le biais de la connexion de données (102) ; et
transmettre les données de service à un système de circuits de traitement (130, 150).

10. Appareil (110) selon la revendication 9, dans lequel la politique de routage (116) dépend d'une quantité de données de service à recevoir par le biais de la connexion de données (102).

11. Procédé (300) permettant de connecter un véhicule (100) à un ou plusieurs services en nuage automobiles (120) pour des services de communication de données, le procédé (300) comprenant les étapes consistant à :
obtenir (310) une politique de routage numérique (116) ; et
établir (320) une connexion de données (102) avec au moins l'un parmi les services en nuage automobiles (120) conformément à la politique de routage numérique (116), la politique de routage numérique (116) définissant une priorité pour chaque interface d'une pluralité d'interfaces de communication (115, 117-1, 117-2, 119) à utiliser pour la connexion de données (102), dans lequel la politique de routage numérique (116) dépend d'un paramètre opérationnel (114) du véhicule (100), et dans lequel le paramètre opérationnel comporte au moins l'un parmi un état de conduite de véhicule, un niveau de batterie, un nombre de cycles de charge, dans lequel la politique de routage numérique correspond à une liste de types de transactions de véhicules, VTTL.

12. Programme informatique comprenant des instructions qui, lorsqu'elles sont exécutées par au moins un processeur, amènent le processeur à effectuer toutes les étapes du procédé (300) selon la revendication 11.

13. Véhicule (100) comprenant un appareil (110) selon l'une quelconque des revendications 1 à 10.
